# EUROPÄISCHE PATENTSCHRIFT

(11) **EP 1 057 605 B1**
(45) Veröffentlichungstag und Bekanntmachung des Hinweises auf die Patenterteilung: **09.07.2003**
(21) Anmeldenummer: 00110778.8
(22) Anmeldetag: 20.05.2000
(51) Int. Cl.: B29B 11/16, B29B 15/12, B29B 15/10

(54) **Faden zur Verbindung von Fasern eines Faserhalbzeugs sowie Faserhalbzeug, und Verfahren zur Herstellung von Faserverbundwerkstoffen**
Yarn for binding fibers of a fibrous composite and process for making composite materials
Fil pour lier les fibres d'un materiau composite et procédé de fabrication

(30) Priorität: 04.06.1999 DE 19925588
(43) Veröffentlichungstag der Anmeldung: 06.12.2000
(73) Patentinhaber: DLR Deutsches Zentrum für Luft- und Raumfahrt e.V., 51147 Köln (DE); Invent GmbH, 38100 Braunschweig (DE); SAERTEX Wagener GmbH & Co. KG, 48369 Saerbeck (DE)
(72) Erfinder: Kleffmann, Jens Dipl. Ing., 30165 Hannover (DE); Kleineberg, Markus, Dipl.-Ing., 30966 Hemmingen (DE); Pabsch, Arno, Ing., 38110 Braunschweig (DE); Wagener, Gert, Dipl.-Ing.,, 48282 Emsdetten (DE); Schöppinger, Carsten, Dipl.-Ing.,, 38259 Salzgitter (DE); Sigle, Christof, Dipl.-Ing.,, 38104 Braunschweig (DE)
(74) Vertreter: Gerstein, Hans Joachim, Dipl.-Ing.

(56) Entgegenhaltungen:
- EP-A- 0 302 989
- EP-A- 0 310 200
- EP-A- 0 628 401
- DE-A- 3 416 855
- FR-A- 2 594 858
- KURT A. SCHMIDT: "Textilglas für die Kunststoffverstärkung", 1972, RUDOLF ZECHNER VERLAG, SPEYER

## Beschreibung

Die Erfindung betrifft einen Faden zur Verbindung von Fasern eines Faserhalbzeugs zur Verwendung in Faserverbundwerkstoffen. Weiterhin betrifft die Erfindung ein Faserhalbzeug zur Verwendung in Faserverbundwerkstoffen, wobei Kreuzungspunkte von Fasern mit Fäden miteinander verbunden werden und ein Verfahren zur Herstellung von Faserverbundwerkstoffen, bestehend aus einem Matrixmaterial und Faserhalbzeug, das in das Matrixmaterial eingebettet ist, wobei die Fasern des Faserhalbzeugs mit Fäden miteinander verbunden werden.

Faserverbundwerkstoffe sind Materialien, die aus einem Matrixmaterial, z. B. einer Polymermatrix als kontinuierlicher Phase und darin eingebundenen Verstärkungsfasern als diskontinuierliche Phase bestehen. Durch die in das Matrixmaterial eingelagerten Verstärkungsfasern werden die Eigenschaften des Matrixmaterials, d. h. des Kunststoffs verbessert. Insbesondere kann die Festigkeit und Steifigkeit des Materials vorteilhaft verändert werden.

Als Verstärkungsfaser wird Faserhalbzeug in Form einer flächenförmigen Anordnung von Fasern verwendet. Derartiges Faserhalbzeug wird auch als textiles Flächengebilde bezeichnet und kann in drei Gruppen eingeteilt werden:
a) Vliese;
b) nicht maschenbildende Systeme (Gewebe, Gelege, Geflechte);
c) maschenbildende Systeme (Gewirke, Gestricke).

Je nach Aufbau bzw. Herstellung dieser Flächengebilde erfolgt für diese verschiedene Typen eine unterschiedliche Fixierung der eigentlichen Verstärkungsfasern. Aufgrund Ihrer Struktur benötigen z. B. Gewirke, Gestricke, und Gewebe keine zusätzliche Fixierung. Vliese können hingegen genadelt oder durch Binder fixiert sein. Zur Handhabung von Gelegen, die durch Aufeinanderliegen von Fadensystemen unterschiedlicher Orientierung gebildet werden, ist eine Fixierung der Kreuzungspunkte einzelner Fasern notwendig.

Nach Imprägnierung und Aushärtung bzw. Erstarrung des Matrixmaterials ist der Faden immer noch in Faserform als zusätzliche Phase in dem Verbundwerkstoff vorhanden und hat eine entsprechende Grenzfläche zum Matrixmaterial. Beispielsweise ist in der FR A 2 594 858 ein Textilgewebe offenbart, bei dem Verstärkungsfäden mit thermisch aufschmelzbaren Verbindungsfäden zusammengehalten werden. Durch Erwärmung des Gewebes verschmelzen die Verbindungsfäden mit den Verstärkungsfäden und werden aufgedeckt. Die Verstärkungsfäden selbst sind jedoch Immer noch verschmolzen mit den Verbindungsfäden als zusätzliche Phase in dem Gewebe vorhanden.

Aus der EP 310 200 A2 ist ein Gewebe bekannt, dass hoch- und niedrigschmelzende Fäden hat. Durch Erwärmung des Gewebes in einem Temperaturbereich, der oberhalb des Schmelzpunktes der niedrig schmelzenden Fäden und unterhalb des Schmelzpunktes der Hochtemperatur schmelzenden Fäden liegt, werden die leicht schmelzbaren Fäden gleichmäßig in dem Gewebe verteilt und in das Matrixmaterial eingebunden. Auch hier sind die leicht schmelzbaren Fäden immer noch als zusätzliche Phase in dem Verbundwerkstoff vorhanden und bilden eine Grenzfläche zum Matrixmaterial.

Es hat sich herausgestellt, daß die Fäden aufgrund der unterschiedlichen physikalischen Eigenschaften des Fadenmaterials im Vergleich zum Matrixmaterial und zum eigentlichen Verstärkungsmaterial und einer möglicherweise unzureichenden Anbindung der Fäden an das Matrixmaterial Fehlstellen und mögliche Initiierungspunkte für Schädigungen sein können. Kommt es durch die Grenzfläche der Fäden zu einer Ablösung der Nähfadenoberfläche vom Matrixmaterial sind entsprechend wie bei anderen Poren besonders bei dynamischer Beanspruchung des Faserverbundwerkstoffes von den Fäden ausgehende großflächige Schädigungen und möglicherweise ein vollständiges Versagen des Faserverbundes zu erwarten.

Weiterhin besteht bei Matrixmaterialien, die für die Infiltration bzw. Aushärtung einer erhöhten Temperatur oberhalb der Raumtemperatur bzw. der Lagertemperatur des Faserhalbzeugs ausgesetzt werden müssen, das Problem, das ab Erreichen einer bestimmten Temperatur in Abhängigkeit von der Verstreckung bzw. Temperung der Fäden aufgrund der Schrumpfbestrebungen der Fäden Verzerrungen oder Verspannungen in den eigentlichen Verstärkungsfasern eingebracht werden. Diese Gefahr des Verzerrens des Faserhalbzeugs ist immer dann gegeben, wenn ein Schrumpfen der Fäden vor dem eigentlichen Gelieren oder Erstarren des Matrixmaterials auftritt.

Zur Vermeidung der vorgenannten Probleme war es daher die Aufgabe der Erfindung, einen verbesserten Faserverbundwerkstoff bereitzustellen.

Die Aufgabe wird durch Verwendung von Fäden gelöst, wobei die Fäden so beschaffen sind, daß sie sich bei der Herstellung des Faserverbundwerkstoffes durch Einbetten des Faserhalbzeugs in Matrixmaterial zersetzen und keine Grenzschicht zwischen dem Matrixmaterial und dem Faserhalbzeug mehr bilden. Es wird somit vorgeschlagen, die Fäden zu zersetzen, nachdem das Faserhalbzeug in das Matrixmaterial eingebaut wurde. Dann dienen die Fäden nur noch zur Handhabung des Faserhalbzeugs.

Das Abbauen bzw. Zersetzen der Fäden kann durch entsprechende Auswahl des Fadenmaterials dahingehend erfolgen, daß sich die Fäden in dem Matrixmaterial auflösen. Für jedes Matrixmaterial ist somit ein geeignetes Fadenmaterial auszuwählen, das zudem noch eine ausreichende mechanische Festigkeit zur Fixierung der Verstärkungsfasern des Faserhalbzeugs aufweisen muß.

Es ist auch eine Auswahl des Fadenmaterials dahingehend denkbar, daß die Fäden bei einer oberhalb der Raum- oder Lagertemperatur des Faserhalbzeugs liegenden Herstellungstemperatur für den Faserverbundwerkstoff aufschmelzen. Der Schmelzpunkt der Fäden kann z. B. bei der Härtungstemperatur für das Matrixmaterial oder bei der Temperatur zur Imprägnierung des Faserverbundwerkstoffs liegen.

Als Fadenmaterialien, die bei der Imprägnierungstemperatur aufschmelzen, sind vorteilhafterweise Copolymere, insbesondere auf der Basis von Polyamid oder Polyester verwendbar.

Bei einem entsprechenden Verfahren zur Herstellung von Faserverbundwerkstoffen werden die Fäden nach dem Einbetten des Faserhalbzeugs in das Matrixmaterial derart zersetzt, dass die Fäden keine Grenzschicht mehr zwischen dem Matrixmaterial und dem Faserhalbzeug bilden.

Durch die Zersetzung der Fäden sind diese nicht als eigene Phase in dem Faserverbundwerkstoff vorhanden. Sie können damit nicht als Fehlstellen und mögliche Initiierungspunkte für Schädigungen dienen, die bei herkömmlichen Fäden mit einer entsprechenden Grenzfläche zu dem Matrixmaterial vorhanden sind. Weiterhin werden durch den Auflösungsprozeß der Fäden Verzerrungen oder Verspannungen des Faserhalbzeugs vermieden, wie sie bei herkömmlichen Fäden durch die Schrumpfbestrebungen der Fäden bei erhöhten Herstellungstemperaturen des Faserverbundwerkstoffs auftreten können. Weiterhin ist es durch eine entsprechende Kompatibilität des Nähfadenwerkstoffs zum Matrixmaterial möglich, das Werkstoffverhalten des Faserverbundwerkstoffs bei Impactbeanspruchung zu verbessern. Die Erfindung wird nachfolgend näher erläutert.

Zur besseren Handhabung wird Faserhalbzeug mit Fäden an Kreuzungspunkten einzelner Fasern miteinander verbunden. Hierdurch können bestimmte Formen des Faserhalbzeugs festgelegt und das Faserhalbzeug entsprechend drapiert werden. Zudem ist ein solchermaßen durch Fäden fixiertes Gelege von Fasermatten durch die Fixierung der Kreuzungspunkte besser transportabel.

Bei der Herstellung von Faserverbundwerkstoffen wird ein durch Fäden fixiertes Faserhalbzeug in ein Matrixmaterial eingebracht. Das Matrixmaterial kann z. B. ein duroplastischer Binder, wie z. B. PF-, MF-, UF-, UP- und EP-Harze sein. Es können auch termoplastische Binder PA, PC, POM, PET, PBT, PP und ABS verwendet werden. Durch das Einbetten des Faserhalbzeugs in diese Polymermatrixmaterialien werden vor allem die mechanischen und termischen Eigenschaften des Grundmaterials verbessert, wie z. B. die Zug- und Bruchfestigkeit, der E-Modul, die Wärmefestigkeit und die Maßbeständigkeit. Der jeweils erzielbare Grad der Verbesserung dieser Eigenschaften hängt von der Haftung zwischen dem Matrixmaterial und dem Faserhalbzeug, d. h. von den Vorgängen in der Grenzschicht ab. Es wird daher vorgeschlagen, daß die Fäden, die zur Fixierung des Faserhalbzeugs notwendig sind, in dem Faserverbundwerkstoff zersetzt werden und somit keine Grenzschicht mehr bilden.

Die Zersetzung der Fäden kann zum einen dadurch erfolgen, daß sich diese im Matrixmaterial auflösen.

Es sind auch Kombinationen von Fadenmaterialien mit Matrixmaterialien vorteilhaft einsetzbar, bei denen die Fadenmaterialien bei der Härtungstemperatur des Matrixmaterials aufschmelzen.

Weiterhin sind Kombinationen von Fadenmaterialien und Matrixmaterialien vorteilhaft einsetzbar, bei denen das Fadenmaterial bei der Temperatur zur Imprägnierung des Faserverbundwerkstoffs aufschmilzt.

## Patentansprüche

1. Verwendung von Fäden zur Verbindung von Fasern eines Faserhalbzeugs in Faserverbundwerkstoffen, wobei die Fäden so beschaffen sind, dass sie sich bei der Herstellung des Faserverbundwerkstoffes durch Einbetten des Faserhalbzeugs in Matrixmaterial zersetzen und nicht mehr als eigene Phase zwischen dem Matrixmaterial und dem Faserhalbzeug in dem Faserverbundwerkstoff, vorhanden sind.

2. Verwendung von Fäden nach Anspruch 1, **dadurch gekennzeichnet, daß** die Fäden im Matrixmaterial des Faserverbundwerkstoffs auflösbar sind.

3. Verwendung von Fäden nach Anspruch 1, **dadurch gekennzeichnet, daß** die Fäden bei der Härtungstemperatur des Matrixmaterials aufschmelzbar sind.

4. Verwendung von Fäden nach Anspruch 1, **dadurch gekennzeichnet, daß** die Fäden bei der Temperatur zur Imprägnierung des Faserverbundwerkstoffes aufschmelzbar sind.

5. Verwendung von Fäden nach einem der Ansprüche 1 bis 4, **dadurch gekennzeichnet, daß** die Fäden ein Copolymer sind.

6. Verwendung von Fäden nach Anspruch 5, **dadurch gekennzeichnet, daß** das Copolymer auf der Basis von Polyamid oder Polyester gebildet ist.

7. Verfahren zur Herstellung von Faserverbundwerkstoffen, bestehend aus einem Matrixmaterial und aus Faserhalbzeug, das in das Matrixmaterial eingebettet wird, mit den Schritten:
- Verbinden der Fasern des Faserhalbzeugs an Kreuzungspunkten einzelner Fasern miteinander mit Fäden,
- Einbetten des Faserhalbzeugs in das Matrixmaterial,
**gekennzeichnet durch**
Zersetzen der Fäden nach dem Einbetten des Faserhalbzeugs in das Matrix-material derart, dass die Fäden nicht mehr als eigene Phase zwischen dem Matrixmaterial und dem Faserhalbzeug in dem Faserverbundwerkstoff vorhanden sind.

8. Verfahren nach Anspruch 7, **dadurch gekennzeichnet, daß** die Fäden im Matrixmaterial aufgelöst werden.

9. Verfahren nach Anspruch 7, wobei der Faserverbundwerkstoff zur Imprägnierung erwärmt wird, **dadurch gekennzeichnet, daß** die Fäden durch die Temperatur zur Imprägnierung des Faserverbundwerkstoffs aufgeschmolzen werden.

10. Verfahren nach Anspruch 8 oder 9, **dadurch gekennzeichnet, daß** die Fäden durch die Temperatur zur Härtung des Matrixmaterials aufgeschmolzen werden.

## Claims

1. Use of threads for joining fibres of a semifinished fibre product in fibre composites, the threads being made to decompose during preparation of the fibre composite by embedding the semifinished fibre product into a matrix material and not to be present in form of a separate phase between the matrix material and the semifinished fibre product in the fibre composite.

2. Use of threads according to claim 1, **characterized by** the threads being dissolvable within the matrix material of the fibre composite.

3. Use of threads according to claim 1, **characterized by** the threads being meltable at the curing temperature of the matrix material.

4. Use of threads according to claim 1, **characterized by** the threads being meltable at a temperature for impregnation of the fibre composite.

5. Use of threads according to one of claims 1 to 4, **characterized in that** the threads are a copolymer.

6. Use of threads according to claim 5, **characterized in that** the copolymer is formed using a polyamide or polyester as a basis.

7. Method for producing fibre composites consisting of a matrix material and a semifinished fibre product being embedded into the matrix material, with the following steps:
- joining the fibres of the semifinished fibre product at points, where separate fibres cross each other, with threads,
- embedding the semifinished fibre product into the matrix material, **characterized by** decomposing the threads after embedding of the semifinished fibre product into the matrix material such that the threads are no more present as separate phase between the matrix material and the semifinished fibre product in the fibre composite.

8. Method according to claim 7, **characterized in that** threads are dissolved in the matrix material.

9. Method according to claim 7, wherein the fibre composite is heated for impregnation, **characterized in that** the threads are melted at the temperature for impregnation of the fibre composite.

10. Method according to claim 8 or 9, **characterized in that** the threads are melted at the temperature to be used for curing of the matrix material.

## Revendications

1. Utilisation de fils pour relier des fibres d'un semi-produit fibreux dans des matériaux composites renforcés de fibres, dans laquelle les fils sont d'une constitution telle qu'ils se désagrègent lors de la fabrication du matériau composite renforcé de fibres en noyant le semi-produit fibreux dans la matière de la matrice, et ne sont plus présents comme phase propre entre la matière de la matrice et le semi-produit fibreux dans le matériau composite renforcé de fibres.

2. Utilisation de fils selon la revendication 1, **caractérisée en ce que** les fils sont solubles dans la matière de la matrice du matériau composite renforcé de fibres.

3. Utilisation de fils selon la revendication 1, **caractérisée en ce que** les fils sont fusibles à la température de prise de la matière de la matrice.

4. Utilisation de fils selon la revendication 1, **caractérisée en ce que** les fils sont fusibles à la température pour l'imprégnation du matériau composite renforcé de fibres.

5. Utilisation de fils selon l'une des revendications 1 à 4, **caractérisée en ce que** les fils sont un copolymère.

6. Utilisation de fils selon la revendication 5, **caractérisée en ce que** le copolymère est formé à base de polyamide ou polyester.

7. Procédé pour fabriquer des matériaux composites renforcés de fibres, constitués d'une matière de matrice et d'un semi-produit fibreux qui est noyé dans la matière de la matrice, comprenant les étapes suivantes :
- avec des fils, relier les fibres du semi-produit fibreux les unes aux autres en des points de croisement de fibres individuelles,
- noyer le semi-produit dans la matière de la matrice,
**caractérisé par** :
- désagréger les fils après que le semi-produit fibreux a été noyé dans la matière de la matrice de façon que les fils ne soient plus présents en tant que phase propre entre la matière de la matrice et le semi-produit fibreux dans le matériau composite renforcé de fibres.

8. Procédé selon la revendication 7, **caractérisé en ce que** les fils sont dissous dans la matière de la matrice.

9. Procédé selon la revendication 7, dans lequel on chauffe le matériau composite renforcé de fibres pour l'imprégnation, **caractérisé en ce que** les fils sont fondus par la température destinée à l'imprégnation du matériau composite renforcé de fibres.

10. Procédé selon la revendication 8 ou 9, **caractérisé en ce que** les fils sont fondus par la température pour la prise de la matière de la matrice.
